# EUROPÄISCHE PATENTSCHRIFT

(11) **EP 0 531 841 B1**
(45) Veröffentlichungstag und Bekanntmachung des Hinweises auf die Patenterteilung: **17.08.1994**
(21) Anmeldenummer: 92114831.8
(22) Anmeldetag: 31.08.1992
(51) Int. Cl.: B65H 3/08, B65H 7/12, B65H 7/18

(54) **Verfahren zur Entnahme von lichtempfindlichen Einzelblättern aus einem Magazin**
Method for separating photosensitive single sheets from a magazine
Procédé pour enlever des feuilles photo-sensibles individuelles d'un magasin

(30) Priorität: 13.09.1991 DE 4130563
(43) Veröffentlichungstag der Anmeldung: 17.03.1993
(73) Patentinhaber: Agfa-Gevaert AG, 51373 Leverkusen (DE)
(72) Erfinder: Pietsch, Gerald, Dipl.-Ing., W-8950 Kaufbeuren (DE); Leithenmair, Ernst, W-8000 München 83 (DE)

(56) Entgegenhaltungen:
- EP-A- 0 368 166
- US-A- 4 518 159

## Beschreibung

Die Erfindung betrifft ein Verfahren nach dem Oberbegriff des Hauptanspruchs.

Röntgenaufnahmen werden heute in vielen Bereichen verwendet, beispielsweise in der medizinischen Diagnostik ober bei der zerstörungsfreien Werkstoffprüfung. Nach der Aufnahme müssen die Blattfilme entwickelt werden, um das latente Bild sichtbar zu machen. Hierzu werden die Aufnahmen in der Dunkelkammer in ein Magazin eingelegt und dort für den Entwicklungsvorgang gesammelt. Das gefüllte und geschlossene Magazin wird dann lichtdicht mit einem sogen. Feeder gekoppelt, der die Blätter einzeln dem Magazin entnimmt und dem Entwicklungsgerät zuführt.

Bei den mit einer lichtempfindlichen Schicht versehenen Filmblättern entsteht das Problem, daß aufeinanderliegende Blätter aneinanderhaften. Für diesen Fall ist es äußerst schwierig, nur das oberste Blatt eines Filmstapels in einem Magazin abzuheben. Es wurde daher bereits vorgeschlagen, beim Anheben des oberen Blattes die Sauger eine Bewegung ausführen zu lassen, bei der der Film leicht abgeknickt wird. Dadurch läßt sich in den meisten Fällen die Adhäsionskraft zwischen den Filmblättern aufheben. Um den Filmblättern etwas Zeit zur Trennung zu geben, werden die Sauger für einige Augenblicke in der entsprechenden Position belassen. Diese Zeit ist bei einigen Geräten einstellbar und muß - abhängig vom Filmmaterial - so reguliert werden, daß praktisch in allen Fällen eine Trennung eintritt.

Neuerdings sind Geräte bekannt geworden, bei denen nach der Entnahme geprüft wird, ob nur ein oder mehrere Filmblätter entnommen wurden. War die Entnahme fehlerhaft, so werden die Filmblätter in das Magazin zurückbefördert und es wird ein zweiter Entnahmeversuch gestartet.

Es ist die Aufgabe der Erfindung, die Effektivität der weiteren Entnahmeversuche so weit zu steigern, daß ein Öffnen des Magazins in der Dunkelkammer nur noch bei beschädigten Filmen und dadurch bedingten Verhakungen notwendig ist.

Die Aufgabe wird gelöst durch ein Verfahren mit den kennzeichnenden Merkmalen des ersten und/oder des fünften Anspruchs. Bei beiden Varianten werden einzelne Parameter, die zur Trennung aneinanderhaftender Filme beitragen, erhöht. Die Abknickzeit kann gegenüber herkömmlichen Geräten verkürzt eingestellt werden, da bei den weiteren Entnahmeversuchen die Wahrscheinlichkeit, daß diese zum Erfolg führen, erhöht wird. In vorteilhafter Weise werden die Trennungsparameter bei den weiteren Entnahmeversuchen stufenweise erhöht. So kann beispielsweise die Abknickzeit beim zweiten Versuch verdoppelt oder der Abknickwinkel um einen bestimmten Betrag vergrößert werden. Sollte wieder keine Trennung erfolgen, wird ein dritter Versuch mit erneut gesteigerten Trennparametern durchgeführt. Ist auch der dritte Versuch erfolglos verlaufen, so kann mit ziemlicher Sicherheit darauf geschlossen werden, daß auch weitere Versuche keinen Erfolg zeigen, da beispielsweise ein Film seitlich eingerissen ist und sich der darunterliegende Film in diesen Rippen verhakt hat. Für diesen Fall wird dann ein akustisches Warnsignal generiert. Ebenso ist es natürlich möglich, etwa eine Blinklampe in Betrieb zu setzen. Für diesen Fall muß das Magazin dem Feeder entnommen und in der Dunkelkammer die Störung beseitigt werden.

Weitere Einzelheiten und Vorteile der Erfindung ergeben sich aus den Unteransprüchen im Zusammenhang mit der Beschreibung eines Ausführungsbeispiels, das Anhand der Zeichnungen eingehend erläutert wird.

Es zeigen:
- Fig. 1: ein Magazin für mehrere nebeneinanderliegende Filmstapel in Aufsicht,
- Fig. 2: einen Querschnitt durch das in Fig. 1 dargestellte Magazin,
- Fig. 3: eine Entnahmevorrichtung zur Verwendung des Magazins aus Fig. 1,
- Fig. 4: eine Entnahmevorrichtung nach Fig. 3 mit einer Übergangsstrecke,
- Fig. 5: eine Einrichtung zur Prüfung auf Doppelblatteinzug, und
- Fig. 6: einen Querschnitt durch Fig. 5.

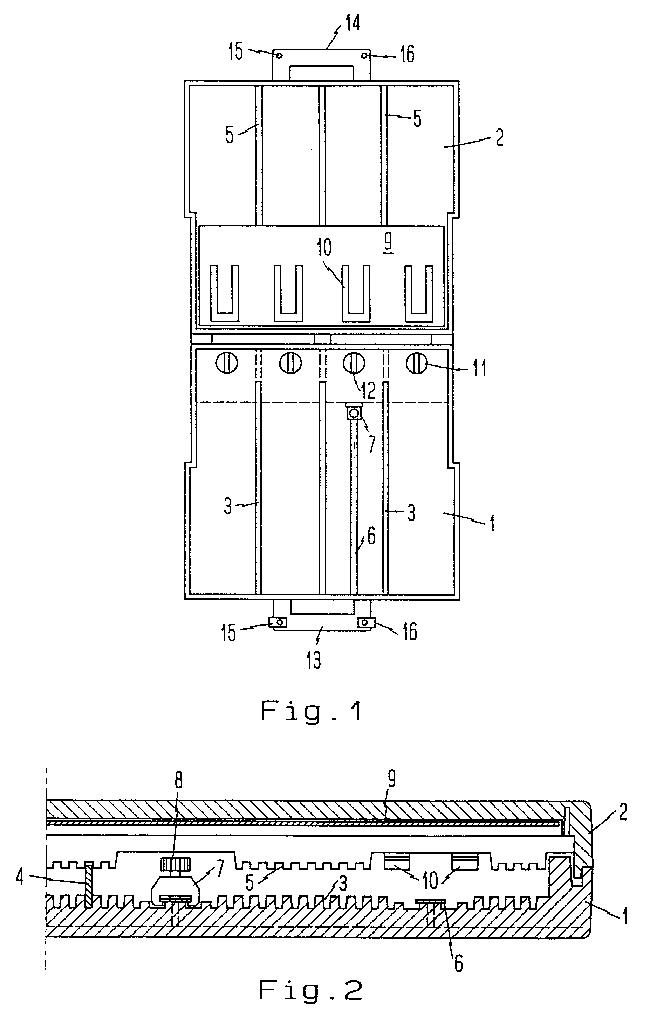

Das in Fig. 1 und Fig. 2 dargestellte Magazin besteht aus einem Magazinboden 1 und einem Magazindeckel 2. Der Magazinboden enthält nutförmige Vertiefungen 3, von denen in Fig. 1 aus Übersichtsgründen nur drei Nuten dargestellt sind. In die Nuten 3 sind Stege 4 einsteckbar. Korrespondierende Nuten 5 befinden sich im Deckel 2. Zusätzlich sind im Boden 1 Schienen 6 angebracht, auf denen Schieber 7 mit Hilfe der Schrauben 8 in jeder Stellung fixierbar sind. Diese Schieber 7 bilden die Längsbegrenzung der einzelnen Zonen für die Filmstapel. Das gezeigte Magazin ist so ausgelegt, daß vier Filmstapel nebeneinander aufgenommen werden können. Das Magazin kann mit Hilfe der Stege 4 und der Schieber 7 auch so eingeteilt werden, daß ein, zwei oder drei Stapel nebeneinander verarbeitet werden können. Da bei geschlossenem Magazin zwischen der Schraube 8 und dem Deckel 2 ein schmaler Schlitz verbleibt, durch den besonders schmale Filmformate hindurchrutschen könnten, sind an dem Schiebedeckel 9 zusätzlich Niederhalter 10 vorgesehen, die die Filmstapel auch bei unvorsichtiger Handhabung des Magazins gegen den Magazinboden 1 drücken. Im Bereich der Entnahmeöffnung, die durch den Schiebedeckel 9 verschlossen ist, sind im Magazinboden 1 vier kreisförmige Vertiefungen 11 vorgesehen, die einen nochmals tieferliegenden Schlitz 12 aufweisen. Ist an dieser Stelle des Magazins kein Filmblatt vorhanden, so trifft der entsprechende Sauger in diese Vertiefung 11. Da durch den Schlitz 12 immer Luft nachströmen kann, kann an diesem Sauger kein Vakuum aufgebaut werden. Auf diese Weise läßt sich folglich das Vorhandensein oder Nichtvorhandensein von Filmen feststellen. Das Magazin weist am Magazinboden und am Magazindeckel je eine Griffhälfte 13, 14 auf, die mit zwei unabhängig voneinander arbeitenden Schließmechanismen 15, 16 ausgerüstet sind. Da beide Schließmechanismen betätigt werden müssen, um das Magazin zu öffnen, kann praktisch eine unbeabsichtigte Öffnung ausgeschlossen werden.

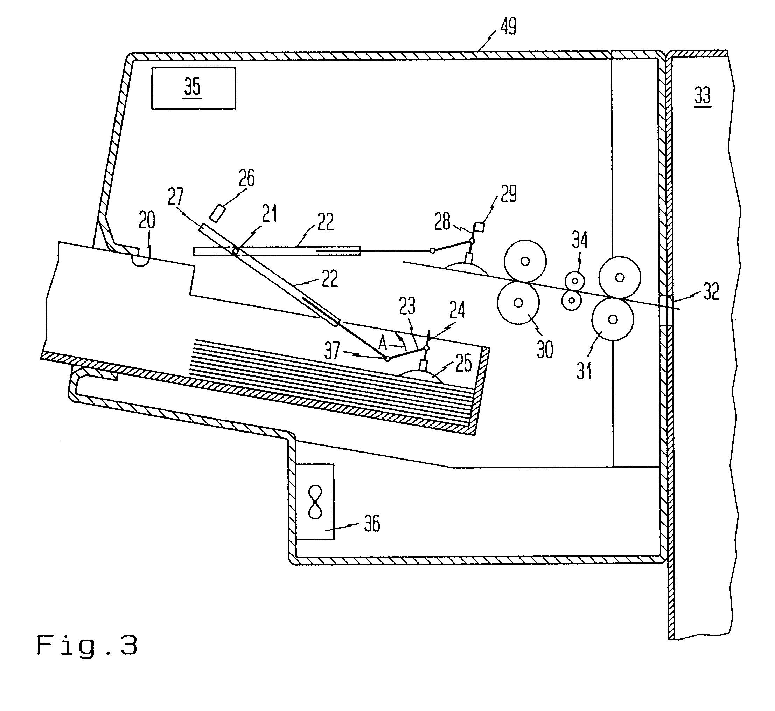

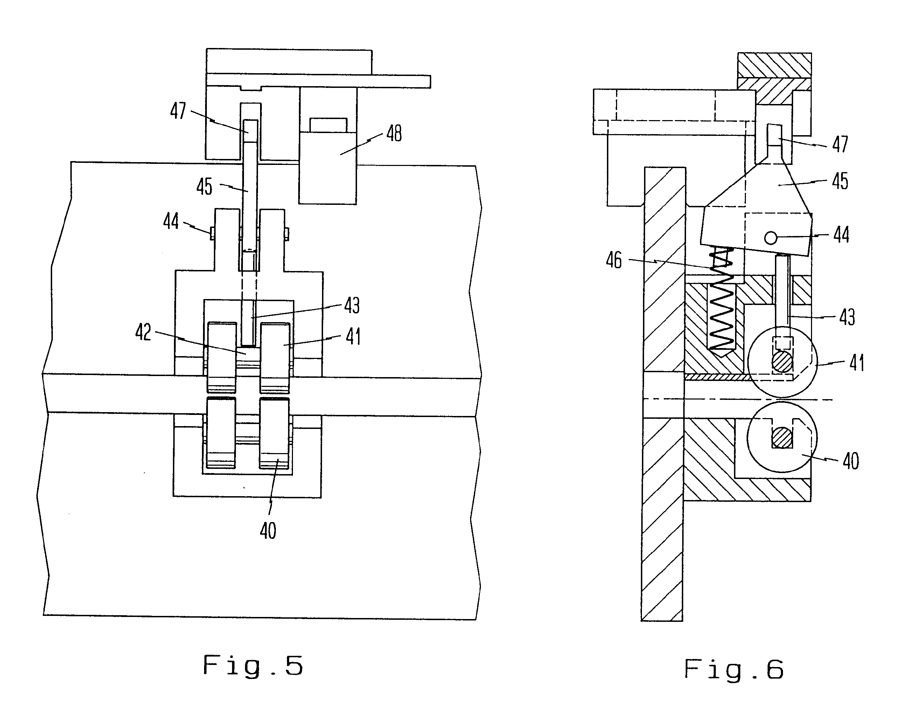

Um die Filme entladen und der Entwicklungsvorrichtung zuführen zu können, wird das Magazin über den Magazinschacht 20, wie in Fig. 3 gezeigt, in die Entnahmevorrichtung eingeführt. Dabei wird der Schiebedeckel 9 in nicht dargestellter Weise automatisch geöffnet. In der Vorrichtung sind zwei um die Drehachse 21 gelagerte Teleskopstangen 22 vorgesehen. An ihnen ist je ein Hebel 23 schwenkbar gelagert. Die anderen Enden der beiden Hebel 23 sind durch die Stange 24 fest miteinander verbunden. Auf diese Stange sind vier Sauger 25 montiert. Der Mikroschalter 26 wird durch die Verlängerung 27 des Teleskoparmes 22 betätigt. Der Fortsatz 28 auf dem Sauger 25 wirkt auf den Mikroschalter 29 ein. Von den Transportwalzenpaaren 30, 31 werden die Filme in die Einfuhröffnung 32 des Entwicklungsgerätes 33 gefördert. Zwischen den Transportwalzenpaaren befindet sich die Prüfvorrichtung 34, die in den Figuren 5 und 6 näher dargestellt ist. Für jeden Sauger 25 ist eine Prüfvorrichtung 34 vorgesehen.

Jede dieser Einrichtungen besteht aus einer festen Rolle 40 und einer beweglichen Rolle 41. Die Achse 42 der Rolle 41 wirkt mit einem Stift 43 zusammen. Oberhalb dieses Stiftes ist ein um die Achse 44 drehbar gelagerter Hebel 45 angeordnet. Die Feder 46 wirkt so auf den Hebel 45 ein, daß dieser den Stift 43 und damit die Rolle 41 in ihre tiefstmögliche Stellung drückt. An seinem oberen Ende ist der Hebel 45 mit einer Fahne 47 versehen, deren Stellung sich entsprechend der Stellung der Rolle 41 verändert. Die Stellung der Fahne 47 wird über die Lichtschrankeneinrichtung 48 abgetastet. Die gezeigte Stellung stellt den Zustand dar, wenn sich zwischen den Rollen 40 und 41 ein Blattfilm befindet.

Ist nun das Magazin in den Magazinschacht 20 eingeschoben und der Schiebedeckel 9 geöffnet, so beginnt der von der Elektronik 35 gesteuerte Entladevorgang. Hierzu werden die Teleskopstangen 22 so um die Achse 21 geschwenkt, daß sich die Sauger 25 in das offene Magazin absenken. Diese Bewegung wird gestoppt, wenn einer der vier in den Saugern 25 vorgesehenen Mikroschalter (nicht dargestellt) durch einen Filmstapel betätigt wird. Nun wird in den Saugern ein Vakuum aufgebaut und jeweils das oberste Blatt der Filmstapel angesaugt. Durch eine Schwenkbewegung der Hebel 23 um die Achse 37 in Richtung des Pfeiles A wird das oberste Blatt in seinem vorderen Bereich abgehoben. Durch diesen Abknickvorgang lösen sich normalerweise auch Filmblätter, die an dem darunterliegenden Blatt anhaften. Nun werden die Teleskopstangen 22 und die Hebel 23 so verschwenkt, daß die Filmblätter durch eine Verlängerung der Teleskopstangen tangential zwischen die Transportrollen 30 eingeführt werden können. Auch diese Stellung ist in Figur 3 dargestellt.

Die Steuerung des Entladevorgangs durch die Elektronik 35 erfolgt in folgender Weise: Beim Stoppen der Eintauchbewegung der Sauger 25 in das Magazin wird festgestellt, an welchem der Sauger ein Vakuum aufgebaut werden kann. Da die Filmstapel im Magazin normalerweise eine unterschiedliche Höhe aufweisen, wird beim ersten Entladevorgang nur bei ein oder zwei Saugern ein Vakuum aufgebaut werden. In diesem Fall werden dann der oder die Stapel so weit abgebaut, bis alle Stapel die gleiche Höhe aufweisen. Während des Anhebens der Filmblätter ist folglich bereits bekannt, welcher der vier Sauger ein Vakuum aufgebaut hat und folglich auch, an welcher der vier Prüfeinrichtungen 34 ein Filmblatt erwartet wird. Haben beispielsweise alle vier Sauger ein Vakuum aufgebaut, muß an allen vier Prüfeinrichtungen 34 auch ein Filmblatt detektiert werden. In diesem Fall sperrt die Fahne 47 den Strahl der Lichtschranke 48. Ein Fehler ist dann aufgetreten, wenn an einer der Prüfeinrichtungen 34 die Lichtschranke 48 nicht gesperrt wird, also kein Blatt detektiert wird.

In diesem Fall werden die Transportrollen 30 in entgegengesetzter Richtung angetrieben und die Filmblätter zurückgeworfen. Der Vorgang wird dann wiederholt. Wird die Lichtschranke 48 kurz unterbrochen und ist danach wieder durchgängig, so befinden sich zwischen den Rollen 40 und 41 zwei oder mehr Filmblätter. Das bedeutet, daß der Trennvorgang fehlerhaft abgelaufen ist und durch einen oder mehrere der Sauger 25 nicht nur ein Filmblatt abgehoben wurde. Auch in diesem Fall werden die Filmblätter zurückgeworfen und der Vorgang wiederholt. Hierzu besteht zum einen die Möglichkeit, die Abknickzeit, zu verlängern, also die Zeit, die die Sauger 25 in ihrer Stellung nach dem Verschwenken des Arms 23 um die Achse 37 verharren, bevor das Filmblatt durch das Verschwenken des Teleskoparms 22 ganz abgehoben wird. Zum anderen besteht die Möglichkeit, den Abknickwinkel, also den Schwenkwinkel des Armes 23 um die Achse 37 zu vergrößern. Bei einer Verlängerung der Abknickzeit wird in bevorzugter Weise bei jedem weiteren Entnahmeversuch eine Verdoppelung vorgenommen. Hierdurch wird die Wahrscheinlichkeit, die Entladung letztendlich erfolgreich zu beenden, enorm gesteigert. Bei einer Doppelblatterkennung in der Prüfeinrichtung 34 wird der Entnahmevorgang dreimal durchgeführt, beim letzten Versuch also mit vierfacher Abknickzeit. Sollten die Blätter selbst dann noch nicht erfolgreich getrennt werden können, wird eine akustische oder optische Fehlermeldung generiert und das Magazin muß in der Dunkelkammer geöffnet und der Trennvorgang von Hand durchgeführt werden.

Wurde das letzte Filmblatt aus dem Magazin entladen, so fallen die Sauger 25 in die Öffnungen 11 des Magazinbodens, so daß der Aufbau eines Vakuums unmöglich wird. Da das Nichtaufbauen eines Vakuums aber auch andere Ursachen haben kann, ist zur Sicherheit noch der Mikroschalter 26 vorgesehen, der in dieser Stellung der Sauger von der Verlängerung 27 betätigt wird. Die Sauger werden dann in eine Ruhestellung verfahren und das leere Magazin kann entnommen werden.

Um das Vakuum abschalten zu können, sobald ein Film an die Transportrollen 30 übergeben wurde, ist der Mikroschalter 29 vorgesehen. Sobald der Sauger in einer Position ist, in der die Rollen 30 den Film sicher erfaßt haben, wird der Mikroschalter 29 durch den Fortsatz 28 betätigt und dadurch das Vakuum abgeschaltet. Selbstverständlich können die Mikroschalter 26 und 29 auch durch Lichtschrankeneinrichtungen ersetzt werden.

Durch das Gebläse 36 wird in dem Gehäuse 37 der Entnahmevorrichtung ein leichter Überdruck erzeugt, so daß durch den Schlitz 32 des Entwicklungsgeräts keine Entwicklungsdämpfe eindringen können.

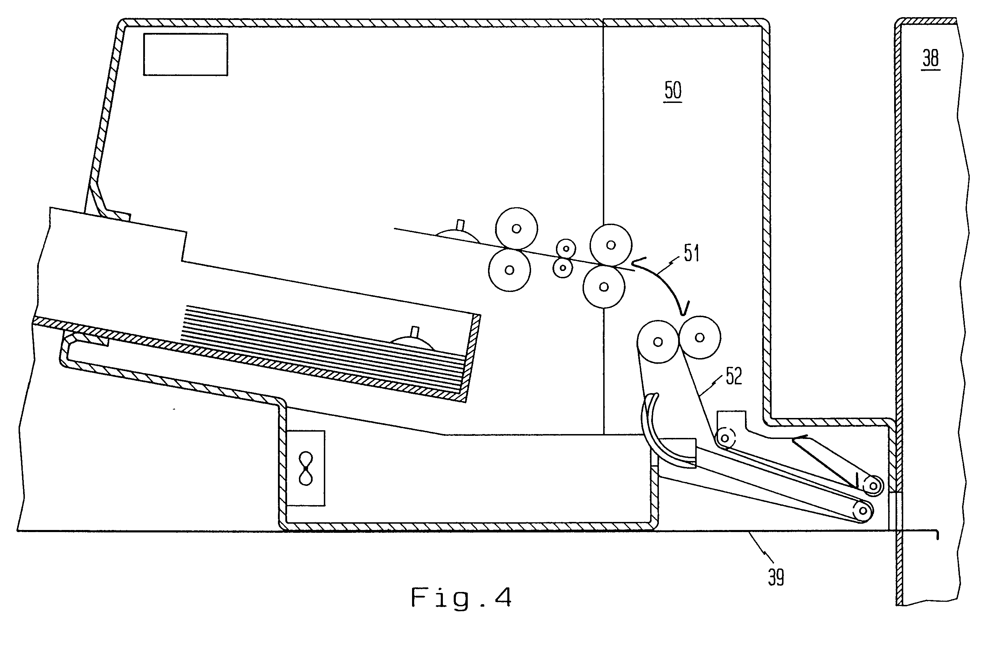

Figur 4 zeigt ein Entwicklungsgerät 38, das mit einem Tisch 39 zur Einzeleingabe von Filmblättern in der Dunkelkammer ausgerüstet ist. Um auch ein solches Entwicklungsgerät über ein Magazin mit Filmen versorgen zu können, wird die Entnahmevorrichtung mit einem zusätzlichen Bauteil, einer Übergangsstrecke 50, versehen. Diese weist eine zusätzliche Führung 51 und ein Transportband 52 auf. Über diese Übergangsstrecke werden die Filme zu dem direkt über dem Eingabetisch 39 befindlichen Einfuhrschlitz 32 des Entwicklungsgeräts 38 befördert. Die Entnahmevorrichtung ist damit praktisch für alle handelsüblichen Entwicklungsgeräte verwendbar.

## Patentansprüche

1. Verfahren zur Entnahme von lichtempfindlichen Einzelblättern aus einem Magazin (1, 2) mit Hilfe von Saugern (25), die das oberste Blatt an einer Seite erfassen, die erfaßte Seite beim Anheben leicht abknicken und das Blatt aus dem Magazin fördern, wobei nach der Entnahme geprüft wird, ob zwei oder mehr übereinanderliegende Blätter entnommen wurden und für diesen Fall die Blätter in das Magazin zurückgelegt werden und ein weiterer Entnahmeversuch gestartet wird, dadurch gekennzeichnet, daß bei dem weiteren Entnahmeversuch die Abknickzeit verlängert wird.

2. Verfahren nach Anspruch 1, dadurch gekennzeichnet, daß die Abknickzeit bei jedem weiteren Entnahmeversuch verdoppelt wird.

3. Verfahren nach Anspruch 1, dadurch gekennzeichnet, daß wenigstens drei Entnahmeversuche gestartet werden.

4. Verfahren nach Anspruch 3, dadurch gekennzeichnet, daß nach dem dritten Entnahmeversuch eine akustische und/oder optische Fehlermeldung generiert wird.

5. Verfahren nach dem Oberbegriff von Anspruch 1, dadurch gekennzeichnet, daß bei dem weiteren Entnahmeversuch der Abknickwinkel vergrößert wird.

## Claims

1. Method for removing single photosensitive sheets from a magazine (1, 2) by means of suction devices (25), which engage the top sheet at one side, bend the engaged side slightly when raising the sheet and move the latter out of the magazine, with a check being made following the removal as to whether two or more superimposed sheets have been removed and, should this be the case, the sheets being returned to the magazine and a further removal attempt initiated, characterised in that the bending period is extended when a further attempt to remove a sheet is made.

2. Method according to claim 1, characterised in that the bending period is doubled each time a further attempt to remove a sheet is made.

3. Method according to claim 1, characterised in that at least three attempts to remove a sheet are initiated.

4. Method according to claim 3, characterised in that an acoustic and/or a visual error message is generated following the third attempt to remove a sheet.

5. Method according to the preamble of claim 1, characterised in that the angle of bend is increased when a further attempt to remove a sheet is made.

## Revendications

1. Procédé pour prélever des films photosensibles individuels dans un magasin (1, 2) à l'aide de ventouses (25) qui saisissent le film extrême supérieur sur une face, qui plient légèrement la face ainsi saisie lors du soulèvement, et expulsent le film du magasin, procédé dans lequel, après le prélèvement, on vérifie si deux ou plus de deux films superposés ont été prélevés et dans lequel les films sont dans ce cas renvoyés au magasin, et une nouvelle tentative de prélèvement est déclenchée, caractérisé en ce que, dans la tentative de prélèvement suivante, le temps de pliage est allongé.

2. Procédé selon la revendication 1, caractérisé en ce que le temps de pliage est doublé à chaque nouvelle tentative de prélèvement.

3. Procédé selon la revendication 1, caractérisé en ce qu'il se déclenche au moins trois tentatives de prélèvement.

4. Procédé selon la revendication 3, caractérisé en ce qu'après la troisième tentative de prélèvement, il s'engendre une alarme de défaut acoustique et/ou optique.

5. Procédé selon le préambule de la revendication 1, caractérisé en ce que l'angle de pliage est agrandi pendant la tentative de prélèvement suivante.
